# EUROPEAN PATENT SPECIFICATION

(11) **EP 3 242 732 B1**
(45) Date of publication and mention of the grant of the patent: **28.10.2020**
(21) Application number: 16701065.1
(22) Date of filing: 11.01.2016
(51) Int. Cl.: A63G 31/16, B25J 9/00, G09B 9/04, G09B 9/12, B62D 57/028

(54) **MOBILE PLATFORM**
MOBILE PLATTFORM
PLATE-FORME MOBILE

(30) Priority: 09.01.2015 GB 201500321
(43) Date of publication of application: 15.11.2017
(73) Proprietor: McLaren Applied Technologies Limited, Woking, Surrey GU21 4YH (GB)
(72) Inventor: SAWADE, Caleb Allan, London Greater London SW11 6JN (GB); BOWYER, Robert, Fulham Greater London SW6 6LE (GB); GLOVER, Anthony Richard, Guildford Surrey GU1 1SW (GB)
(74) Representative: Slingsby Partners LLP
(86) International application number: PCT/GB2016/050054
(87) International publication number: WO 2016/110719

(56) References cited:
- WO-A1-2014/198861
- CN-B- 102 110 383
- DE-A1- 19 920 776
- DE-A1-102012 008 744
- DE-U1- 29 716 148
- US-A1- 2010 279 255

## Description

This invention relates to motion simulators and motion platforms.

Motion simulators are widely used to elicit a sensation of motion for an occupant which correlates to a scenario that is being simulated. The occupant is situated on a moveable platform. The platform is moved relative to a fixed ground frame to simulate the dynamic motion of, for example, a vehicle. Motion platforms can comprise a plurality of actuators to generate desired translational and rotational motions.

A common architecture for a motion simulator is the Stewart platform or hexapod. In a Stewart platform a load is supported above a base by six linear actuators which are attached with rotational freedom to the base and the load. This arrangement allows the load to be moved with six degrees of freedom.

A Stewart platform is well suited to simulator applications where similar amounts of motion are required in all linear axes: for example in flight simulators. However, it is less suitable for applications requiring substantially asymmetric magnitudes of motion. Simulating the motion of a land vehicle involves relatively high magnitudes of motion in the horizontal (X and Y) axes and a relatively low amount of motion in the vertical (Z) axis. In order for a Stewart platform to adequately simulate the motion of a highly manoeuvrable land vehicle, such as a sports car, the scale of the Stewart platform would have to be unfeasibly large. As in many other existing motion simulators, in applications where time-extended accelerations would cause the motion platform to exceed its fixed spatial workspace limits the illusion of motion and emersion of the simulated environment breaks down.

One way to address this is to mount the base of a Stewart platform on a secondary motion structure that enables the base to be moved along horizontal axes. An example of such a system is the National Advanced Driving Simulator (NADS), in which the base of a Stewart platform is mounted on orthogonal tracks which permit the base to be moved linearly in X and Y. Another example is the "Driver in Motion" simulator, in which the base of a Stewart platform is attached to three non-orthogonal linear actuators which permit the base to be moved linearly in X and Y. A problem with these arrangements is that the large mass of the Stewart platform makes it difficult to deliver a sufficient frequency response.

GB 2 378 687 describes an alternative design of simulator in which the load platform is supported by four linearly acting sleds which can be moved to drive the load in X, Y and Z.

A fundamental issue for simulator motion platforms has been the restricted translational range of their chosen actuator technology. Linear motors have become popular to generate large translational motions (e.g. greater than 10m) but are typically limited to a single direction of travel unless coupled with a second linear actuator, typically orientated perpendicular to the first, which generates a second direction of motion. These arrangements can allow large translational travel, however are often heavy in order to support the required payload and therefore lack high-frequency response. This problem can be addressed using a secondary stacked stage placed on top which includes a higher dynamic response for multiple degrees of freedom, as in the NADS.

It would be advantageous if a motion platform could address the aforementioned issues by minimizing the weight of the combined system and payload whilst allowing relatively large (e.g. greater than 15m) linear translational limits in multiple axes.

There is a need for an improved design of motion simulator.

US 3,876,255 describes a wheel having peripheral rotational elements whose rotation axes are inclined to the primary rotation axis of the wheel. Such a wheel is known as a Mecanum wheel. DE 10 2012 008744 describes a positioning device employing such a wheel. US 2013/0068543 describes a vehicle employing such a wheel. US 1,303,535 describes a wheel having peripheral rotational elements whose rotation axes are perpendicular to the primary rotation axis of the wheel. Such a wheel is known as an Omniwheel.

DE 199 20 776 describes a positioning device with driveable feet.

Planar linear motors can move a load in X and Y directions over a surface. Examples include the Sawyer motor (see "Two-axis Sawyer Motor for Motion Systems", E Pelta, IEEE Control Systems Magazine vol. 7, issue 5, October 1987) and the systems described in US 6,445,093.

According to one aspect of the present invention there is provided a motion system as set out in claim 1.

The motion system may be configured to operate as a motion simulator. The motion system may be a motion simulator. The simulator may simulate a land vehicle, preferably a wheeled land vehicle such as an automobile. The motion system may be configured to act as a transporter for transporting articles. The motion system may be equipped with an attachment mechanism capable of automatic actuation for attachment to and detachment from articles.

Each foot may be configured for driving itself in multiple directions across the stage to thereby enable the motion platform to be moved with six degrees of freedom relative to the stage. The feet may be controlled cooperatively to permit the motion platform to be accelerated with six degrees for freedom.

The feet may support the platform. The motion platform may be supported over the feet by the legs. One or more of the legs may be rigid. Preferably all of the legs are rigid. Each foot may be free to move in two dimensions independently of the position and/or motion of the other feet.

Each leg may be articulated to the motion platform by a revolute joint. The axis of the revolute joints may be substantially parallel to the stage when the platform is in a neutral position.

Each leg may be articulated to the respective foot by a spherical joint.

Each foot may be configured so as to be instantaneously driveable in any direction across the stage. Each foot may be configured for driving itself in multiple directions across the stage whilst remaining engaged with the stage to thereby enable the motion platform to be moved with six degrees of freedom relative to the stage. Each foot may be capable of exerting a reaction force against the stage, so as to move the platform, whilst simultaneously moving with respect to the stage.

One or more of the feet may comprise: at least one rotatable element such as a wheel, roller or turbine that engages the stage, and at least two independently operable drives such as electric motors or internal combustion engines for causing the rotatable element(s) to rotate so as to drive the respective foot to move across the ground surface.

The stage may be a ground surface. The stage may be planar. The stage may be horizontal.

The rotatable elements may be wheels. Each wheel may be driveable to rotate about a rotation axis and may be equipped with circumferential rotatable elements having rotation axes offset from the rotation axis of the wheel. The wheel may be a Mecanum wheel or an Omniwheel. The rotatable element may be a ball. The feet may comprise multiple such rotatable elements.

One or more of the feet may comprise means to increase adhesion between the one or more feet and the stage. In some examples, one or more of the feet may be configured to draw air so as to increase friction between the or each rotatable element and the stage. For example, such a foot may be configured to draw air so as to reduce the pressure in the zone between the foot and the stage to a pressure below ambient pressure, or to increase the pressure in the zone on the opposite side of the foot from the stage to a pressure above ambient pressure. Such a foot may comprise a cowl for partially enclosing a volume between the foot and the floor for facilitating the development of such a differential pressure. Such a foot may comprises a cowl defining a chamber therein, the cowl having a lower boundary terminating proximal to the stage and the said foot being configured to expel air from the chamber so as to reduce pressure in the chamber and thereby draw the foot against the stage. Such a foot may be configured to draw air in such a way as to cool the drives. In some examples, one or more of the feet may comprise a magnet and the stage may comprise a ferromagnetic material or vice versa. For example, the one or more feet may comprise a ferromagnetic material and the stage may include cement comprising iron filings.

One or more of the feet may be configured to cooperate with the stage so as to implement a two-dimensional planar electric motor whereby the foot can be driven across the ground surface in substantially two dimensions. The planar electric motor may, for example, be one of a switched reluctance motor, an induction motor and a permanent magnet motor. The planar electric motor may develop a reaction force between the foot and the floor.

The stage may be a liquid surface. The feet may be buoyant with respect to the liquid.

One or more of the feet may comprise a battery for storing electrical energy. Such a foot may be configured to be powered by the battery for driving across the stage.

The system may be configured to cause the said one or more of the feet to recover energy to the battery during operation.

The motion system may comprise a control unit for implementing a motion simulation by causing the feet to move across the ground surface. The control unit may comprise a wireless transmitter. The motion system may comprise one or more wireless receivers whereby the control unit can communicate wirelessly with the feet to command the driving of the feet across the ground surface. The control unit may implement a control strategy using one or more of: stored data relating to an environment being mimicked by the motion simulation; stored performance data of an object being simulated; data input by a user operating the motion platform; outputs of a computational model of an environment and/or interactions between an environment and an object being simulated. The control unit may be static with respect to the stage, e.g. whilst the platform is in motion. Alternatively, the control unit may be moveable relative to the stage together with the platform and/or the feet.

The drive mechanism may be operable to cause relative motion of the platform and the foot in which the leg terminates. Such a drive mechanism may be configured to alter the length of the leg. The drive mechanism may be operable in a direction perpendicular to the ground surface.

The motion platform may be untethered to the stage.

The motion platform, the legs and the feet may constitute a self-contained vehicle.

The system may have only three feet as described above. Alternatively it may have more than three feet.

Each foot may be configured to move across the stage by developing a reaction force against the stage simultaneously with that motion.

Each foot may be configured to move across the stage whilst remaining in continuous contact with the stage.

According to other examples, there is provided a motion system operable on a moving surface for imposing motion on a motion platform, the motion system comprising: a plurality of feet coupled to the motion platform and capable of moving freely across the surface so as to impose substantially arbitrary three-dimensional motion on the motion platform relative to the surface.

In some examples, the motion system may comprise means for detecting an effect imparted to one or more of the feet by a movement in the surface and the motion imposed may depend on the detected effect.

It may be desirable for the motion system to be configured to operate as a vehicle.

Each foot may be configured for driving itself in multiple directions across the surface to thereby enable the motion platform to be moved with six degrees of freedom relative to the surface.

Each foot may be coupled to the platform by a respective leg articulated with respect to the motion platform and to the respective foot.

The motion platform may be supported over the feet by the legs. Each leg may be articulated to the motion platform by a revolute joint and to the respective foot by a spherical joint.

Each foot may be configured so as to be instantaneously driveable in any direction across the surface.

The surface may be a liquid surface and the feet may be buoyant with respect to the liquid.

One or more of the feet may comprise: at least one rotatable element arranged to drive against the liquid, and at least two independently operable drives for causing the rotatable element(s) to rotate so as to drive the respective foot to move across the surface.

The rotatable elements may be wheels, each wheel being driveable to rotate about a rotation axis and being equipped with circumferential rotatable elements having rotation axes offset from the rotation axis of the wheel. In some examples, each foot may have a set of selectively actuable jets or screws directed at a range of angles.

One or more of the feet may be configured to cooperate with the surface so as to implement a two dimensional planar electric motor whereby the foot can be driven across the surface in substantially two dimensions. The planar electric motor may be a switched reluctance motor, an induction motor or a permanent magnet motor.

The movement of the surface may comprise one or more of: a change in an average level of the liquid relative to a solid boundary; a local change in shape of the surface caused by waves or other disturbance to the liquid; or the liquid flowing. The motion imposed may result in a movement of the motion platform which is less than the movement of the surface. The motion imposed may result in the motion platform remaining substantially stationary as compared to a movement of the liquid.

One or more of the feet may comprise a battery for storing electrical energy and such a foot may be configured to be powered by the battery for driving across the surface. Optionally, the system may be configured to cause the said one or more of the feet to recover energy to the battery during operation.

The motion system may comprise a control unit for implementing a motion simulation by causing the feet to move across the surface, the control unit comprising a wireless transmitter and the motion system comprising one or more wireless receivers whereby the control unit can communicate wirelessly with the feet to command the driving of the feet across the surface. The control unit may implement a control strategy using one or more of: stored data relating to an environment being mimicked by the motion simulation; stored performance data of an object being simulated; data input by a user operating the motion platform; outputs of a computational model of an environment and/or interactions between an environment and an object being simulated.

The control unit may be moveable relative to the stage together with the platform and/or the feet.

At least one of the legs may comprise a drive mechanism operable to cause relative motion of the platform and the foot in which the leg terminates. The drive mechanism may be operable in a direction along the length of the leg so as to alter the distance between the platform and the foot. The drive mechanism may be operable in a direction generally perpendicular to the surface.

The motion platform may be untethered to the surface.

The motion platform, the legs and the feet may constitute a self-contained vehicle.

The system may have only four feet. Alternatively, it may have fewer or more than four feet.

Each foot may be configured to move across the surface by developing a reaction force against the surface simultaneously with that motion.

Each foot may be configured to move across the surface whilst remaining in continuous contact with the surface.

According to another aspect of the invention, there is provided a motion system as set out in claim 6.

The motion system may include a means for detecting a force or other effect applied to the object and the motion imposed may depend on the detected force or effect.

The motion system may be configured to operate as a motion simulator and the motion imposed may further depend on an environment being simulated.

Each foot may be configured for driving itself in multiple directions across the surface to thereby enable the object to be moved with six degrees of freedom relative to the surface.

Each foot may be coupled to the object by a respective leg articulated with respect to the object and to the respective foot. The object may be supported relative to the feet by the legs and may be capable of being held and manipulated by a user.

Each leg may be articulated to the object by a revolute joint or alternatively by a spherical joint.

Each foot may be configured so as to be instantaneously driveable in any direction across the surface.

The surface may have a configuration representative of a movement or a desired movement of the object in use in an environment being simulated. The surface may be one of: substantially planar and generally horizontally oriented; non-planar and generally horizontally oriented; curved and generally vertically oriented; generally inclined relative to the horizontal.

One or more of the feet may comprise: at least one rotatable element that engages the surface, and at least two independently operable drives for causing the rotatable element(s) to rotate so as to drive the respective foot to move across the surface. The rotatable elements may be wheels, each wheel being driveable to rotate about a rotation axis and being equipped with circumferential rotatable elements having rotation axes offset from the rotation axis of the wheel. The rotatable element may be a ball.

One or more of the feet may comprise means to increase adhesion between the one or more feet and the surface. In some examples, one or more of the feet may be configured to draw air so as to increase friction between the or each rotatable element and the surface. The said one or more of the feet may comprise a cowl defining a chamber therein, the cowl having a lower boundary terminating proximal to the surface and the said foot being configured to expel air from the chamber so as to reduce pressure in the chamber and thereby draw the foot against the surface. The said one or more of the feet may be configured to draw the said air in such a way as to cool the drives. In other examples, one or more of the feet may comprise a magnet and the surface may comprise a ferromagnetic material or vice versa. For example, the one or more feet may comprise a ferromagnetic material and the surface may include cement comprising iron filings.

One or more of the feet may be configured to cooperate with the surface so as to implement a two-dimensional planar electric motor whereby the foot can be driven across the surface parallel therewith. The planar electric motor may be one of a switched reluctance motor, an induction motor and a permanent magnet motor.

One or more of the feet may comprise a battery for storing electrical energy and such a foot may be configured to be powered by the battery for driving across the surface. In some examples, the system may be configured to cause the said one or more of the feet to recover energy to the battery during operation.

The motion system may comprise a control unit for implementing a motion simulation by causing the feet to move across the surface, the control unit comprising a wireless transmitter and the motion system comprising one or more wireless receivers whereby the control unit can communicate wirelessly with the feet to command the driving of the feet across the surface. The control unit may implement a control strategy using one or more of: stored data relating to an environment being mimicked by the motion simulation; stored performance data of an object being simulated; data input by a user operating the motion platform; outputs of a computational model of an environment and/or interactions between an environment and an object being simulated.

The control unit may be static with respect to the surface or alternatively the control unit may be moveable relative to the surface together with the object and/or the feet.

The drive mechanism may be operable to cause relative motion of the object and the foot in which the leg terminates. The drive mechanism may be operable in a direction perpendicular to the surface.

The object may be untethered to the surface and may be configured to be hand-held.

The object may be configured to be held in contact with the surface via the feet and to be moved across the surface by a user holding the object and imparting the said force on the object.

The motion system may comprise means for providing feedback to a user holding the object of the motion imposed in response to the motion imposed relative to a predefined motion. The feedback may comprise one or more of a force; an imposed movement; a vibration; a sound; a visual indicator; and an indication of deviation of movement from a predefined movement.

The system may have only three feet. Alternatively, it may have fewer or more than three feet.

Each foot may be configured to move across the surface by developing a reaction force against the surface simultaneously with that motion.

Each foot may be configured to move across the surface whilst remaining in continuous contact with the surface.

According to another aspect, there is provided a computer program product as set out in claim 16. The instructions may be stored in a transitory or non-transitory manner and can be realized in computer hardware or software.

The present invention will now be described by way of example with reference to the accompanying drawings, in which:
Figure 1 shows a motion simulator system.
Figures 2 and 3 show a mobile device that forms part of the system of figure 1.
Figures 4 and 5 show wheel trucks of the device of figure 3.
Figures 6 to 11 illustrate ways in which a platform of the device of figure 3 can be moved.
Figure 12 shows schematically a motion system suitable for operating on a liquid surface.
Figure 13 shows schematically a motion system for a hand-held object.
Figure 14 shows schematically a motion system for simulating a sport.

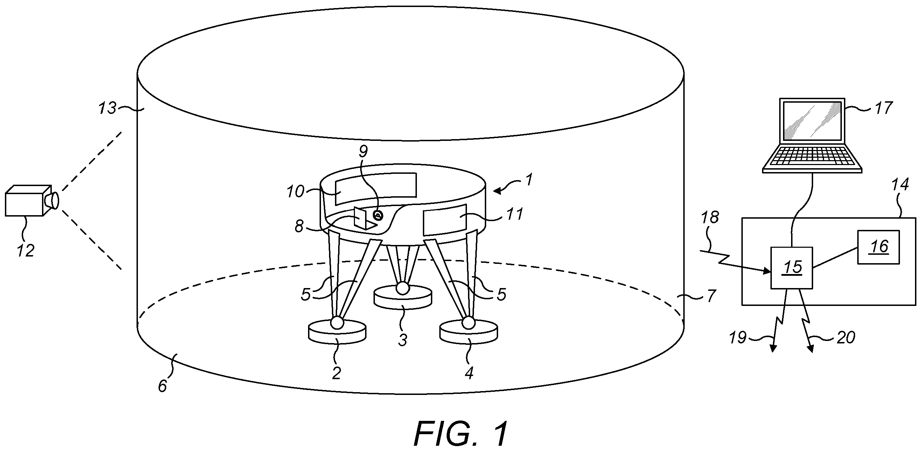

Figure 1 shows a motion simulator system. The simulator comprises a motion platform 1 which can carry an occupant for whom motion is to be simulated. The motion platform is supported by three feet 2, 3, 4. The feet are attached to the platform 1 by rigid struts 5 which are pivotally mounted to the platform and spherically mounted to the feet. The feet are arranged so that they can be driven to move across a floor 6. Each foot can drive in any direction parallel with the floor. Coordinated motion of the feet can cause the platform 1 to move in six degrees of freedom.

The motion platform is located in an arena defined by a peripheral wall 7. The arena has a floor 6 which acts as a stage on which the motion platform can move. In this example the floor is planar and horizontal, but the floor could be inclined and/or uneven. The arena serves to bound the motion of the platform, and the walls of the arena may be used to project images to as part of a simulation exercise, as will be described further below.

Each foot comprises a driving mechanism that can drive the foot in any desired direction parallel to the floor. In the present example, the floor is defined as being parallel with the X/Y motion plane. Each foot is linked to the platform 1 by a rigid support structure or leg which can pivot with respect to the platform and is spherically coupled to the foot. In the present example each support structure is defined by a pair of struts 5 which are attached to the platform at spaced apart points and converge on a common mounting point to their respective foot. Each support structure may be attached to the platform by a revolute joint. Preferably each support structure is attached to the platform in a way that prevents translational motion between the support and the platform. Preferably each support structure is attached to the platform in a way that permits rotational motion between the support and the platform about at least one axis, and preferably about only a single axis. In the case where the support structure is provided by multiple struts 5, each strut may be separately hinged to the platform 1. Each support structure may be attached to its respective foot by a spherical joint. Preferably each support structure is attached to its respective foot in a way that prevents translational motion between the support and the foot. Preferably each support structure is attached to its respective foot in a way that permits rotational motion between the support and the platform about at least two axes, preferably three. In the case where the support structure is provided by multiple struts 5, those struts may have a common joint with the respective foot.

The support structures are sufficiently rigid to permit motion of the feet to be transferred to the platform. However, one or more of the support structures could incorporate damping elements. One or more of the support structures could incorporate linear actuators for varying the length of the respective support structure(s) so as to enhance the motion of the platform.

In a preferred example, as illustrated in figure 1, each foot is attached to the platform by a pair of rigid struts 5. Each pair of struts is attached to the platform in such a way as to permit rotation of those struts relative to the platform about a common axis that is parallel to the floor, and the struts converge on a common spherical joint by which they are attached to respective foot.

The manner in which the motion of the feet causes motion of the platform will be described further below.

The platform 1 comprises a station 8 for an occupant. The station 8 could, for example, be a seat.

When an occupant is being moved by the platform it is desirable to show the user images that enhance the realism of the occupant's experience by simulating the appearance of objects around the platform. This can be done in a number of ways. In one example, the platform may comprise one or more display screens 10 on to which a video stream can be projected. In a second example, the platform may have one or more openings 11 through which the wall 7, 13 of the arena is visible. Then a video stream can be projected on to that wall, e.g. by projector 12 to a region indicated at 13. In a third example a projection screen could be mounted on a moveable gantry attached to the roof of the arena, and could move in correlation with the motion platform. Video could then be projected on to that screen. This has the advantage of mechanically isolating the image from vibration imposed on the platform. In a fourth example, a projection screen could be mounted on a moveable device that runs on the floor 6 mechanically independently of the motion platform 1. Such a projection screen could be mounted on a motion platform analogous to motion platform 1. In a fifth example the occupant may wear a device such as a helmet or headset which displays a video stream directly in front of the user's eyes. In each case, the rendered image of the virtual scene can be updated in real time based on the supposed position and orientation of the simulated vehicle, and the real-time position and orientation of the motion platform.

Figure 1 illustrates a controller 14. The controller comprises a processor 15 and a memory 16. The memory stores in non-transient form (a) generalised program code for execution by the processor to control the simulator system to behave in a desired manner and (b) information characterising a particular simulation environment. The information characterising a simulation environment includes physical characteristics of the environment such as - in the specific example of a race car simulator - the layout of a race track, frictional coefficients of a simulated road surface and performance characteristics of a simulated car. The information characterising a simulation environment also includes information defining visual images of the simulation environment, which can be played to the occupant as a video stream. The simulation controller 14 can communicate with a terminal 17 for configuring the controller. The controller receives inputs 18 from one or more control devices 9 which is/are mounted on the platform 1 for operation by an occupant of the platform. The nature of the control devices will depend on what is being simulated, but in the case of a car they could include a steering wheel, an accelerator pedal, a brake pedal and a gear shifter. The simulation controller provides outputs 19 to the feet 2, 3, 4 in order to automatically control their motion so as to position the platform at a desired location and/or to impose a desired load on the platform. The controller also provides outputs 20 to one or more display devices such as projector 12 to display images to the occupant.

In operation an operator uses terminal 17 to configure the controller to implement a particular simulation environment. Once an occupant is in place in seat 8 on the platform 1 the simulation is started. The simulation proceeds by the controller receiving inputs from the control device(s) 9 and processing them by executing the stored code in accordance with the stored simulation characteristics to estimate how a simulated device would behave in the simulated environment in response to the received inputs. It then controls the feet 2, 3, 4 to move to mimic the linear and rotational accelerations involved in that behaviour, and provides a video output at 20 that from the point of view of the occupant will be reflective of the simulated motion. The system thus provides for human-in-the-loop simulation. In this and other examples, a simulator may be a device configured for imposing on an occupant accelerations, and optionally other stimuli, designed to simulate the sensation of being present in a supposed moving environment. The occupant may be a human.

The controller could be mounted separately from the platform 1, as shown in figure 1, or could be carried by the platform 1 or distributed between the platform and the feet in any suitable way.

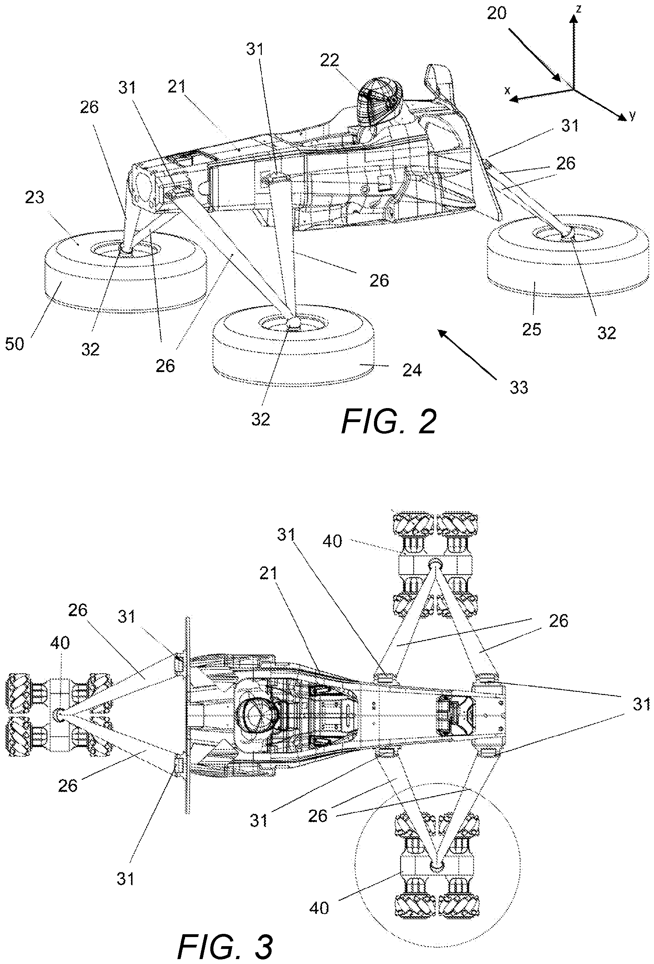

Figure 2 shows another example of a motion system employing the principles described above. The system of figure 2 comprises a motion platform 21. In this example the motion platform is in the form of an open car body or cockpit in which an occupant 22 can sit. The platform is mounted on three feet 23, 24, 25. Two rigid struts 26 run from each foot 23, 24, 25 to the motion platform 21. The struts are attached to the platform by revolute joints 31. The revolute joints of the two struts for a common foot have a common rotation axis. The two struts for each foot converge at a spherical joint 32 by which they are attached to the respective foot. Each foot has a mechanism by which it can drive over the floor 33. In figure 2 those mechanisms are obscured by covers.

For the purpose of simulating the motion of a vehicle, the orthogonal motion axes of the platform can be considered to be as indicated at 20.

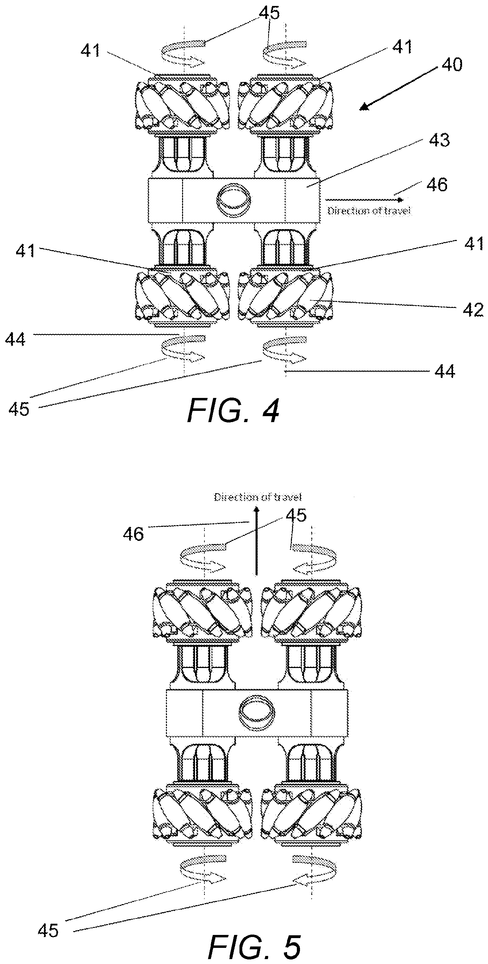

Figure 3 is a plan view of the motion system of figure 2 in which the covers of the feet have been removed to expose the mechanism within each foot. Like components are designated in figure 3 as in figure 2. Each foot comprises a wheel truck or bogie 40, which is shown in more detail in figure 4.

Referring to figure 4, each wheel truck comprises a central carriage 43 by means of which the wheel truck is attached to the respective struts 26. The wheel truck is mounted to the struts 26 by a spherical joint. That joint permits the central carriage 43 to rotate relative to its respective struts about vertical and horizontal axes. Attached to the central carriage are four Mecanum wheels 41. The Mecanum wheels are arranged so that their primary rotation axes 44 are parallel with each other. The carriage is elongate in a direction perpendicular to the rotation axes and parallel to the ground-engaging plane of the truck. A first pair of wheels whose primary axes are coincident are located on either side of the carriage. A second pair of wheels whose primary axes are coincident are also located on either side of the carriage, with their axis offset along the length of the carriage from the axis of the first pair of wheels. The attachment to the struts is located centrally among the wheels. The carriage comprises a pair of motors which can be operated independently. Each motor is capable of driving a respective pair of the wheels to rotate about its primary axis relative to the carriage.

Each Mecanum wheel comprises a central hub which is configured to rotate about the wheel's primary axis, and a series of rollers disposed around the periphery of the wheel. The rotation axes of the rollers lie in a common circle about the rotation axis of the hub. The rotation axis of each roller intersects that circle. The rotation axis of each roller lies in a plane that is parallel to the rotation axis of the wheel and that contains the point where the rotation axis of the respective roller intersects the common circle. In its respective plane, the rotation axis of each roller is offset by a common angle from the rotation axis of the wheel. The wheels are generally as described in US 3,876,255.

This arrangement enables the truck to be driven in any direction across the ground plane on which it runs. In order for the truck to drive perpendicular to the primary rotation axes of the wheels, the wheels are driven by the motors to rotate in a common direction relative to the carriage, and at the same speed. Such rotation is indicated at 45 in figure 4 and results in motion of the carriage as indicated at 46. In order for the truck to drive parallel to the primary rotation axes of the wheels, the wheels are driven by the motors so that the pair of wheels at one end of the carriage rotate in a common direction relative to the carriage and the pair of wheels at the other end of the carriage rotate in the opposite direction to the first pair, all of the wheels rotating at the same speed. Such rotation is indicated at 45 in figure 5 and results in motion of the truck as indicated at 46 in figure 5. By reversing the directions of rotation of both pairs of wheels the truck can be moved in directions opposite to those indicated at 46 in figure 4 and 5. By selecting non-equal rotation speeds for the pairs of wheels the truck can be caused to move in any desired direction across its ground plane.

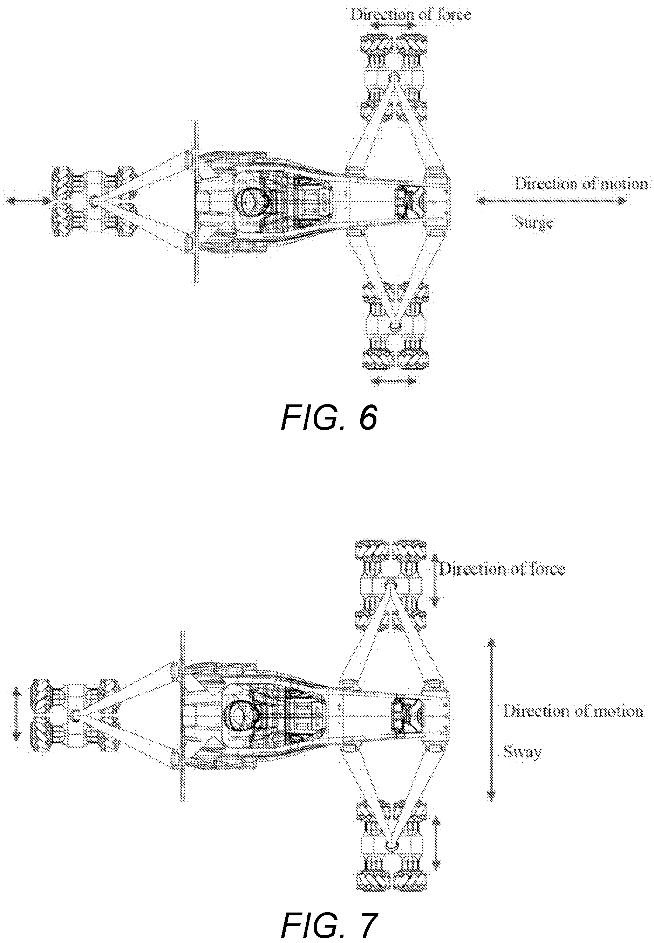

The motion system illustrated in figure 3 has three such trucks, each of which can be operated independently. As a result, the platform 21 can be moved with six degrees of freedom. The ways in which the trucks can be operated to provide those degrees of freedom are illustrated in figures 6 to 11. These examples are illustrated for the arrangement of struts and trucks illustrated in figure 3: i.e. with two trucks disposed on either side at the front of the platform and one truck disposed at the rear of the platform. The trucks could be disposed in other ways relative to the platform.

Figure 6 illustrates surge motion: i.e. linear motion in the longitudinal direction or X axis of the platform 21. To achieve this all three trucks are operated to move across the floor 6 in the surge direction at the same speed.

Figure 7 illustrates sway motion: i.e. linear motion in the lateral direction or Y axis of the platform 21. To achieve this all three trucks are operated to move in the sway direction at the same speed.

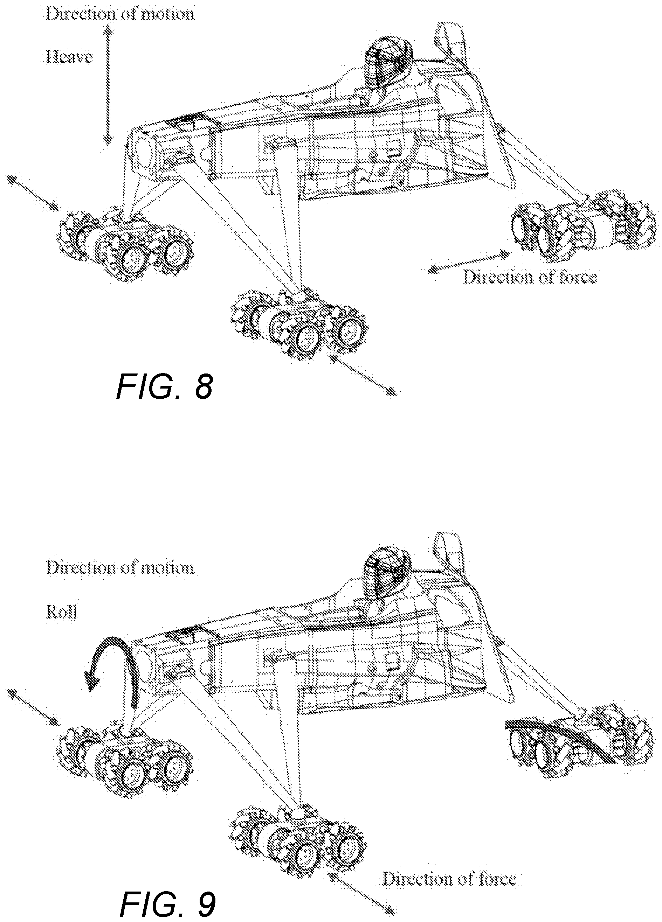

Figure 8 illustrates heave motion: i.e. linear motion in the vertical direction or Z axis of the platform 21. To achieve this the trucks are moved together or apart in such a way as to alter the horizontal distances between each truck and the points 31 at which its struts 26 are mounted to the platform 21. This results in the angle of the struts being changed, and the height of the mounting points 31 from floor 6 altering correspondingly. To cause the platform 21 to move in pure heave the motion of the trucks is controlled so that the vertical rate of movement of the mounting points is the same, and the mounting points do not move horizontally. The precise speed of the trucks to achieve this will depend on the length of the struts 26 and the disposition of the mounting points 31 around the platform 21.

Figure 9 illustrates roll motion: i.e. rotation of the platform 21 about its X axis. To achieve this the forward pair of trucks are moved in the Y direction. This causes the platform to tilt about its X axis, with the struts linking the rear truck to the platform rotating relative to the carriage of that truck about an axis parallel to the platform's X axis. To cause the platform 21 to move in pure roll the motion of the trucks is controlled so that (i) the distance between the front trucks varies so as to keep the X axis of the platform at a constant height, and (ii) the location of the rear truck varies so as to keep the X axis at a constant height and to remain in a constant direction as the struts to that truck vary in inclination.

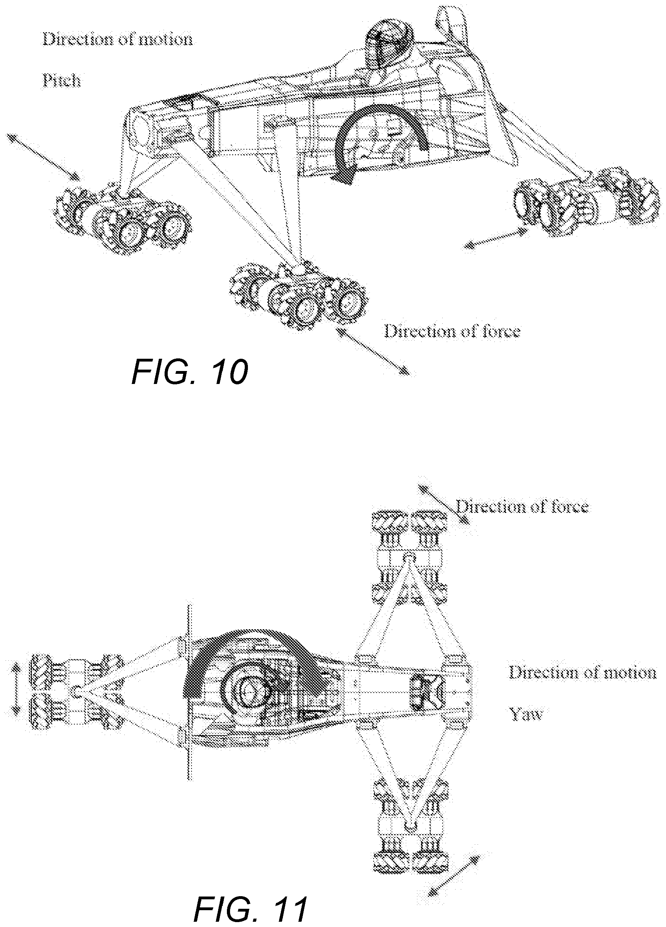

Figure 10 illustrates pitch motion: i.e. rotation of the platform 21 about its Y axis. To achieve this the forward pair of trucks are moved together or apart so as to cause the front of the platform to rise or fall, and the rear truck is moved backwards or forwards so as to cause the rear of the platform to move in the opposite vertical direction. To cause the platform 21 to move in pure pitch the motion of the trucks is coordinated to keep the Y axis of the platform at a constant location.

Figure 11 illustrates yaw motion: i.e. rotation of the platform 21 about its Z axis. To achieve this the trucks are driven in directions such as to cause them to move around circles centred on the Z axis of the platform.

By combinations of the motions described above the platform can be caused to move in compound senses.

Returning to figure 1, the feet 2, 3, 4 can be trucks of the type described above. As a result, the platform 1 of figure 1 can be caused to move with six degrees of freedom. This motion is controlled by the controller 14. The processor 15 executes code stored in memory 16 and thereby determines a desired motion of the platform. That motion can be dependent in some examples on the following data:
(i) pre-stored environmental data defining a physical environment that the simulation is mimicking, such as the layout of a racetrack;
(ii) pre-stored performance data defining the reaction of a vehicle or other system that is being simulated to environmental inputs and control inputs: e.g. the reaction of a vehicle to road unevenness or to steering inputs. This may be in stored in the form of a look-up table or in other formats;
(iii) control inputs from the occupant of the platform 1 via the input device(s) 9.
For example, the system may be simulating the motion of a sports car on a track. The layout of the track is stored in memory 16 along with information defining the performance of the car. The processor 15 models the behaviour of the car in the simulation environment in dependence on the control inputs from the user, and thereby estimates the acceleration that an occupant of the car would undergo. The processor determines a desired motion of the platform 1 to approximate the estimated acceleration. The processor then signals the feet 2, 3, 4 to move across the floor 6 in such a way as to impose the desired motion on the platform. This process continues for the duration of the simulation. Meanwhile, the processor 15 forms a video stream comprising a series of images of the simulation environment from the point of view of the occupant. That video stream is played out to the occupant contemporaneously with the movement of the platform so as to give a visual impression that matches the motion of the platform.

In other examples, instead of or additionally to the motion being dependent on stored data, a computational model of a virtual environment based on an environment that the simulation is mimicking and virtual interactions between that environment and the simulated platform, can be run to solve forces and motions in real-time. That is, for each time-step of the simulation, the model solves the equations of motion governing the dynamics of the interaction between the user's control inputs, the platform and the mimicked physical environment in real-time and produces one or more outputs which can be used in a control strategy. Use of such a computational model allows the simulation process to be generalised to a desired environment, platform and user input and thus allows combinations of many such parameters to be simulated. Thus a number and variety of such parameters can be simulated more efficiently, because there is no need to store predefined data for each parameter.

It will be appreciated that unlike many conventional motion simulators, the motion of the platform 1, 21 is substantially unconstrained in horizontal motion. The platform is free from any fixed or permanent mechanism attaching it to the remainder of the simulation system. As a result the arena in which the platform is moveable can be as large as desired. This capacity for unbound motion permits large translational motion to be achieved in the surge and sway axes, and permits 360 degrees of yaw rotation to be achieved. The translational motion is only limited by environmental conditions such as the size of the arena or room in which the system is implemented.

To allow the control unit 14 to communicate with the feet 2, 3, 4 there may be a wired connection between the feet and the control unit. That wired connection may be by way of an umbilical that additionally provides power to the motors that drive the motion of the feet. Alternatively, the motors may be powered by one or more batteries that move with the feet and/or the platform. For example each foot may comprise a battery that powers the motors of that foot. The control unit may communicate with the feet and/or receive data from the input means 9 by a wireless communication channel. When the movable device has an onboard power store and communication with the control unit is wireless (or the control unit is mounted on the moveable device) no umbilical is needed.

In the example given above, the platform is driven on three independently moveable feet. The platform could have more than three driven feet.

In general, each driven foot is provided with a mechanism that can cause the foot to drive across the floor in any direction. Preferably the foot can translate with components in two dimensions across the floor or other stage on which the foot operates. The foot may move by developing a reaction force against the floor, remaining interacting with the floor to develop that force as it moves across the floor. In the example given above the feet are driven by means of four Mecanum wheels disposed as described. Other arrangements are possible. For example, one or more feet could be provided with any of the following drive mechanisms:
- biaxial linear induction motors that can develop a magnetic force against the floor: these may be any suitable type of planar electric motor including induction motors, switched reluctance motors and permanent magnet motors (stepper motors);
- a ball arranged to engage the floor and that can be driven to rotate about any horizontal axis by means of driven wheels that run against the ball;
- Omniwheels, as described in US 1,303,535.
The feet could be provided as castors, although this is less preferred since unlike other designs such a foot could not be driven instantaneously in any direction parallel to the floor. In a design using castors, a first motor could be arranged for driving a ground-engaging wheel of the foot in yaw (i.e. about an axis having a component that is vertical and/or perpendicular to the floor), in order to direct the wheel in a desired direction, and a second motor could be arranged for causing the wheel to rotate so as to cause the foot to drive across the floor.

In the example given above, the feet/trucks can drive the platform with six degrees of freedom without the feet/trucks necessarily rotating in yaw about the vertical axis. There are a number of possibilities in this regard:
- One or more of the trucks may be controlled so as to maintain a constant attitude in yaw, or more generally to adopt a desired attitude in yaw relative to its respective strut. The trucks may inherently maintain such an attitude as a result of the design of the system: for example if their driving mechanism is incapable of rotating the truck in yaw. For example, when the wheels of the trucks are provided as Mecanum wheels, or where the trucks are driven to move across the floor through a linear induction motor interaction with the floor, it may be convenient for the trucks to be mounted to the struts in such a way that the trucks are not free to rotate about a vertical axis relative to the struts.
- In another example, where the wheels of the trucks are provided as Omniwheels, it may be convenient for the trucks to be mounted to the struts in such a way that the trucks are free to rotate about a vertical axis relative to the struts. In such an approach, one of more of the trucks may be permitted to rotate freely in yaw. The attitude of such a truck in yaw can then be sensed (e.g. by a position sensor located in its joint 32) and the truck can then be controlled accordingly to generate a desired motion of its foot. On the other hand, the yaw angle of the trucks relative to the struts may not matter in some cases, and hence need not be controlled or measured, but the trucks can nonetheless be free to rotate.
- In other examples, the trucks may be driven to control the yaw angle of the trucks relative to the ground.

Where the feet are capable of driving across the ground surface 6 by virtue of friction between the feet and the ground surface, it may be advantageous to implement measures to increase the adhesion between the feet and the ground surface. For example, each foot may comprise a fan for driving air to flow in a generally upwards direction, for example from the region below the foot to the region above the foot. The fan may be arranged so that the airflow generated by the fan passes over the motors within the foot which drive the foot to move, so as to assist in cooling those motors. In one convenient embodiment a shroud 50 (see figure 2) envelopes the foot. The lower part of the shroud forms a skirt whose periphery terminates close to the floor. The shroud defines an air-tight barrier around the foot between the shroud's lower periphery and an air outlet, which is conveniently at the upper part of the shroud. The shroud defines an air chamber. Air can be forced out of the chamber through the outlet, by fans or other means associated with the foot. This lowers the pressure inside the shroud and draws the foot against the floor to improve friction between driving wheels/rollers of the foot and the floor. Alternatively, or in addition, if the ground surface comprises a magnetically susceptible material then each foot may comprise a magnet, e.g. an electromagnet, for attracting the foot to the ground surface. In this case, the ground surface could be formed of cement having iron filings or another ferromagnetic material incorporated therein or thereon.

In the example described above, the links 26 that connect the platform to the feet are rigid. Other designs are possible. One or more of the links could include a drive unit that acts to alter the length of the link. For example there could be a linear actuator acting part-way along the link or at the point where the link is attached to the foot or to the platform. Actuation could be added between each foot and the rigid portions of its respective links to provide linear motion parallel or perpendicular to the ground plane. This can increase response, e.g. high-frequency response, in the heave, pitch and roll axes. One or more of the links could comprise springing or damping, which could have similar mechanical properties to the springing or damping of a vehicle being simulated. Such actuators, dampers and/or springs may be located between (i) the articulated joint of the respective link to its foot and (ii) the articulated joint of the respective link to the platform. Alternatively, it/they may be located between the former joint and the body of the foot or between the latter joint and the body of the platform.

There may be additional actuation systems mounted to the platform to create inertial force on the platform by forcing a mass carried by the platform to move relative to the part of the platform that carries the occupant. Such actuation systems may, for example, be electrodynamic shakers mounted orthogonally to each other. Again, this can assist in imposing high-frequency motion on the occupant. If the length of the struts can be altered, that property may also be used to compensate for any non-roundness of the truck's wheels (as, for example, in the case of a Mecanum wheel) so that such non-roundness is not transmitted to the platform but instead is absorbed by adjustment of the struts as the trucks move.

It is preferred that the system comprises apparatus for measuring the position and attitude of the platform relative to the arena. That data can be fed to the control unit 14 and used as part of the control algorithm. Accurate control over and/or measurement of the position of the platform can improve the quality of the simulation for the occupant. The configuration of the joints between the links 26 and both the platform 21 and the feet/trucks 40 can be sensed by position encoders. The motion and orientation of each foot/truck and of the platform can be sensed by accelerometers. The position and orientation of the feet/trucks and of the platform can be sensed by using a vision system within the simulator workspace. The vision system could, for example, employ lasers to sense the position and orientation of the platform using tracking location markers placed on the platform. These data can be transmitted to the control unit 14. Data may be used to infer the position and orientation of the occupant's view point. This point, and the orientation of the occupant's field of view, is useful for accurate cueing and control of the simulator.

The way in which the platform is controlled by the control unit 14 may take into account the location of the walls or other boundaries of the arena or workspace in which the platform is operating. First, the control unit may operate the platform to ensure that it does not hit the boundary of the arena. Second, the control unit may adapt the motion of the platform so that it can maintain a degree of fidelity when it would otherwise be constrained by the boundary. For example, if the platform is approaching the boundary of the arena then the control unit may cause the platform to be rotated somewhat about a vertical axis, even if that is not true to the simulation, so that the frame of reference of the platform is shifted to one where more lateral motion in a direction required by the simulation is available.

In the situation where the feet are driven by one or more batteries that move with the feet and/or the platform, it may be advantageous to employ regenerative braking when a foot is to absorb energy through reaction against the ground surface. Each wheel motor can operate at various times as a motor or as a generator. For example, when a foot is to be decelerated a motor of the foot can be operated as a generator, converting energy of the system to electrical energy which can be stored in a battery. Individual batteries can be carried by each foot. This can avoid the need to supply motive energy to the feet when the motion platform is in operation. Alternatively, one or more batteries can be carried by the platform. Each battery may serve one or multiple feet. Using the motors of the feet as generators can increase the time for which the system can operate without recharging the batteries.

In a preferred implementation of the simulation system described above, the platform, the legs or struts by which it is connected to the feet, and the feet, constitute a self-contained motion device or vehicle that can move around the simulation arena. The vehicle may move by virtue of friction between it and the floor of the arena or by other mechanisms. Such other mechanisms include ones that cause the vehicle to move by virtue of reaction against the floor: e.g. linear induction motors and switched reluctance motors; or by virtue of other principles such as laterally directed air jets. In each case, it is preferred that the drive mechanism permits the feet to move freely with respect to the arena. The vehicle is preferably untethered, having no fixed mechanical linkage or umbilical to other parts of the simulation system. Where the feet are driven through friction against the floor, the feet could have wheels/rollers or caterpillar tracks that engage the floor and that revolve to cause motion of the platform.

The motion system described above may be used for purposes other than simulation. In one example it may be used for measuring human response to motion for health and safety research. In another example the platform could be used as a manipulator, for example for carrying objects in a factory. A gripper or other attachment device could be mounted on the platform to permit it to pick up and release objects. In another example, a device comprising three or more biaxially driveable feet pivotally linked by stiff struts to a platform (generally as illustrated in figure 2) could constitute an independent vehicle. Such a vehicle could be used outside the arena shown in figure 1. For example, it could be used as a self-stabilising platform for driving over rough terrain. Such a vehicle could be used to transport patients in medical emergencies when stable movement is imperative, or for moving sensitive instrumentation for navigation control. The principles described above for moving the platform in roll, pitch and yaw could be employed to keep the platform level when moving over uneven terrain. In the example of a motion simulator the fidelity of the occupant's experience can be improved if each foot is of a design that can move in any direction instantaneously. For an industrial platform, for example for delivering goods in a warehouse, that criterion is less significant.

In another example, the feet could be buoyant elements that can move substantially in two dimensions across the surface of a body of water such as the sea. The feet could move through reaction against the water (e.g. by means of propellers arranged around the feet and driveable by motors in the feet, or by water jets directed laterally under the surface of the water) or in other ways (e.g. by means of air jets directed laterally above the surface of the water). Using the principles described above, the feet could then move cooperatively so as to keep the platform at a given location notwithstanding any waves or other unevenness of the water surface. One application of such a system is for transferring loads between two structures at sea, such as between a boat and a less mobile structure such as an oil rig. The platform could be permitted to move with the boat, and a load could be transferred from the boat to the platform. Then the platform could be moved to the oil rig, and the platform controlled through cooperative lateral motion of the feet so that it remains stationary relative to the oil rig whilst the load is transferred from the platform to the rig.

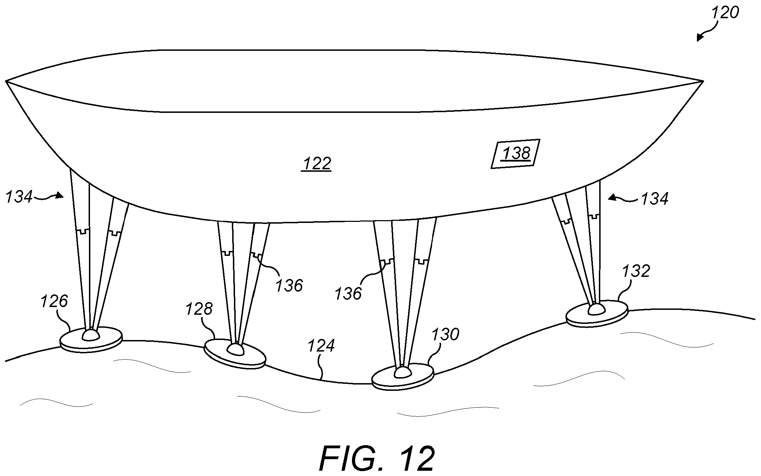

Another application for use on a water surface is a water-based vehicle. Fig. 12 shows an exemplary motion system 120 in which the payload is a boat 122. The hull of the boat 122 does not sit directly on the water surface 124 as the hull of a normal boat would, but instead is supported by four feet 126, 128, 130, 132 which are buoyant. The feet 126, 128, 130, 132 are able to move in a similar manner and have similar characteristics to those discussed above with respect to previously-described arrangements. For example, each foot could be buoyant and provided with a mechanism whereby it can be driven in any direction across the local water surface. Such a mechanism could, for example, be a set of selectively actuable jets or screws directed at a range of angles (e.g. at 120° to each other and in the local water plane), or a mecanum wheel having radially extending wheel treads configured to drive against the water. As with previously-described arrangements, each foot 126, 128, 130, 132 is joined to the boat 122 via a pair of struts 134. In this example, the struts 134 each have an articulated joint 136, such that the length of each strut 136 can be independently adjusted in response to movement of the water surface 124.

As the water surface 124 moves as a result of disturbance caused by waves, each foot 126, 128, 130, 132 experiences an effect such as a force or displacement arising from that movement. The effect imparted to each foot will likely be different from that imparted to the other feet. The motion system 120 can include a means for detecting and measuring the effect applied to each foot, such as a force gauge or accelerometer. This may be a device in each foot, capable of sending signals to a control device 138 on board the hull of the boat 122. In response to receiving the measured information, the control device 138 can send instructing signals to each foot 126, 128, 130, 132 to cause movement of each foot across the water surface 124 which will result in the hull of the boat 122 remaining substantially level. The principles employed would be similar to those described above with respect to driving a land-based motion simulator over rough terrain.

In the example of the struts 134 having articulated joints 136, these may contain a drive unit such as a linear actuator which is controllable by the control device 138.

Thus the control device 138 can additionally control the length of each strut 134 to assist in high-frequency response to the movement of the water surface 124 so as to reduce angular movement of the hull of the boat 122.

In addition to isolating the hull of the boat from motion due to variations in the water surface, the feet may be used to drive the hull of the boat across the water surface.

The control device 38 may have some or all of the features described previously with respect to the controller 14 used with the motion platform 1 of Fig. 1. It may form part of or be separate from a control unit such as the controller 9 of Fig. 1 external to the motion platform 9 and may thus include a user-manipulatable rudder or similar. Thus performance data of the boat's movement in response to effects imposed on it when sitting directly on water can be pre-stored. These, together with data gathered at the feet 126, 128, 130, 132 can be used to determine instructions to be sent to the feet 126, 128, 130, 132 as to how they are to move in order to counter the movement of the boat which would be expected when the boat is subject to such effects. As a result of the mechanisms described above, movement of the boat 122 is controllable to be much less than the movement of the water surface 124 and preferably is controllable such that the boat 122 remains substantially stationary regardless of wave motion at the water surface 124.

It will be appreciated that a different number of feet could be provided and that each one could be connected to the boat by a different number of struts than the two shown as an example. Only some of the joints could be articulated. The struts could be adjustable in other senses. For example, they could be jointed such as by a pivoting joint, which would allow the two portions of the strut to adopt different angles relative to the boat. The struts are shown attached to a lower surface of the boat but one or more of them could instead be joined further up the boat, for example on the side of the boat or at the rim of the boat. Control of the boat movement may be improved by attaching the struts at points on the boat that would be likely to display large degrees of movement relative to the centre of gravity of the boat, for example towards the edges rather than the centre of the hull. Similar principles could be applied to a platform, as discussed above. The boat hull shown in Fig. 12 is merely exemplary and could be a different type of structure, such as a platform.

The water-based motion system described could be used in various water surface situations. For example, it could be used on a body of water having a boundary, such as a swimming pool having walls to contain the water, for training exercises or as an amusement ride. In this case, as well as the water surface moving as a result of shape changes caused by disturbances in the water, its height relative to the boundary could change and the motion of the platform could be controlled in response to one or both types of movement. A similar motion system could also be used in flowing water such as a river and in that case, the motion system as a whole could flow with the river, as a raft, but other movements could be controlled relative to the water, including sway, heave, roll, pitch, yaw and localized surges. The liquid could be a liquid other than water.

In the example of figure 2 the payload of the motion system is a single-seat cockpit 21. In another example, the payload of the motion platform could be a cabin that can accommodate multiple occupants. One use for such a device is as a recreational motion simulator. Recreational motion simulators are sometimes offered as rides at public events. At present, such simulators are typically provided on Stewart platforms or the like. However, a motion system of the type described herein could be deployed so as to run on any convenient surface, such as a car park or a grass-covered field. Any non-uniformity of the surface can be accommodated in relative motion of the feet, making the system suitable for use in a wide range of spaces.

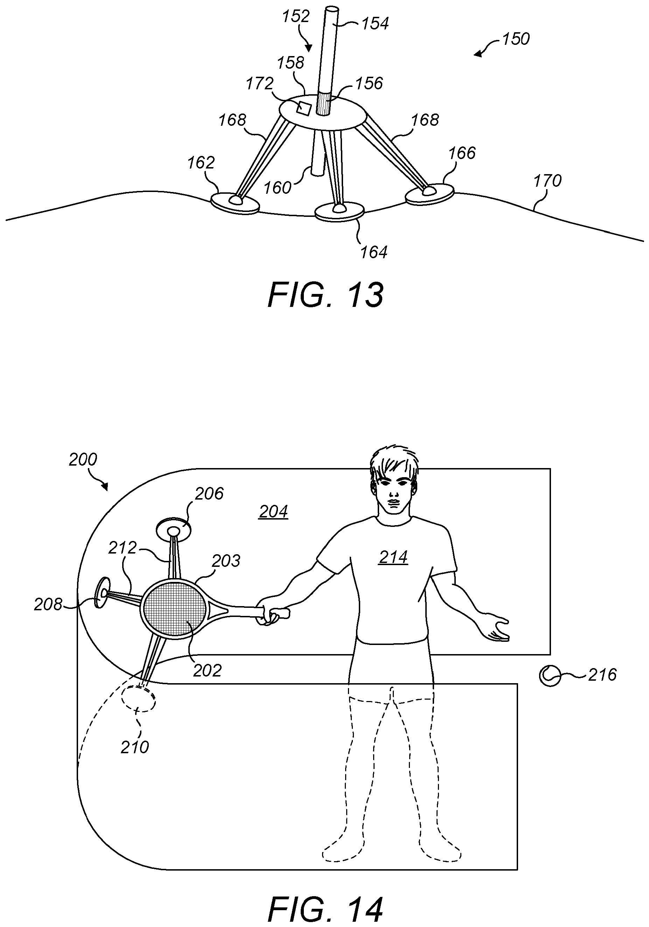

When the system is desired to compensate for the topography of a rough surface or water, and the struts comprise means such as linear actuators whereby their length can be adjusted, it may be convenient to separate the implementation of motion control of the platform so that the linear actuators are operated to compensate for the topographical variation and the motion of the feet over the surface is used to set the position of the platform as if they were running on a flat surface. In other words, low frequency gross terrain positioning can be achieved using the trucks and high-frequency ride motion compensation can be achieved using the strut actuation. A control strategy can be chosen to act in a similar way to a loudspeaker crossover network, separating high frequency movements and low frequency movements to be simulated by the most appropriate component of the system. Thus the struts and trucks can be used in a cooperative manner rather than working against each other. This approach may also be used in the following examples described with reference to Figs. 13 & 14.

An example of a motion system 150 employed on a surface that is not necessarily flat is shown in Fig. 13. The payload in this example is a device or object 152 that is designed to represent a scalpel. It is adapted from a regular scalpel design to include an elongate portion 154 having a grip portion 156 and sized and shaped to be similar to a surgeon's scalpel. The elongate portion 154 is attached at approximately the centre of a flat disc 158. It may have a further elongate portion 160 forming an extension of the elongate portion 154 and extending out of the opposite face of the flat disc 158 so as to make the device 152 look and feel as much like a real scalpel as possible. The elongate portions 154 and 160 may be formed from a single piece of material and may be attached to the disc 158 where the single piece of material passes through a hole in the approximate centre of the disc 158. The elongate portions 154, 160 and the disc 158 together form a rigid structure. The disc 158 provides space to attach three feet 162, 164 & 166 via pairs of struts 168, in a manner previously described.

In the example of Fig. 13, the surface 170 on which the feet sit may represent a part of a human or animal body and the motion system 150 would in this case be designed to simulate a surgical procedure, for example for training a surgeon or a vet. Thus the surface 170 may or may not be any of planar, uneven, generally horizontally-oriented and generally inclined to the horizontal. It may also have a boundary, which may be used to limit movement of the object 152 as described with respect to earlier examples.

Such a simulation could be run with a user passively holding the object 152 whilst stored code is run to move the object in accordance with a chosen surgical procedure, thereby teaching the user how the surgical procedure feels when carried out correctly in terms of incision path and force used. Such a simulation could be achieved by use of a controller remote from the object 152 in a similar manner described above with respect to the system of Fig. 1. Such a controller would send instructions to the feet 162, 164, 166 as to the movement across the surface 170 each should make in order to control movement of the object 152 as desired. The controller remote from the object 152 could hold pre-stored information about a number of surgical areas of human and animal bodies, such as topography, thickness and optimal incision path and force for various surgical procedures which would be used to determine the instructions to be sent. As with the arrangement of Fig. 1, the simulation could be aided by a video stream of a real or animated surgical procedure displayed on a display, so that the user could view the procedure whilst being guided through it by the object 152. Alternatively or additionally, a visual indication of the and other procedures could be provided on the surface 170.

A simulation could also be run with the user attempting to simulate the surgical procedure themselves. A visual of the procedure could be viewed by the user on a screen, for assisting the user in how to conduct the procedure. Alternatively or additionally, a visual indication of the and other procedures could be provided on the surface 170. A user holding the object 152 can impart forces to the surface 170 as though they were using a scalpel to cut the surface 170, but the forces are imparted via the feet 162, 164, 166. Thus the forces and movements imposed by the user on the feet 162, 164, 166 can be detected as described previously. A control device 172 could be provided on the object 152 which is similar to the control device 9 previously described with respect to Fig. 1. Thus the controller remote from the object 152 could receive from the control device 172 inputs as to forces imposed on the feet 162, 164, 166. The remote controller can process the received inputs using stored simulation characteristics to determine how the object 152 would behave in the simulated procedure in response to the received inputs. It then sends instructions to the feet 162, 164, 166 as to the movement across the surface 170 each should make in order to control movement of the object 152 to move in a manner reflective of the simulation.

The motion system 150 could also be operated so as to correct the manipulations made by the user so as to provide feedback to the user as to how well they are performing the simulated task relative to the predefined data. In one example, if the user were to move the object 152 in a manner deviating from the optimum for a surgical procedure being simulated, for example by "cutting" off the stored optimum incision path, the remote controller could decide to impose a force or forces on the feet 162, 164, 166 to move the object 152 back onto the path and/or to rotate the object 152. Another example would be if the user were imparting too great a force for the surgical procedure being simulated, and in this case, the feet 162, 164, 166 could be sent instructions to move so as to impose a heave on the object 152, thereby counteracting the force imparted by the user and informing the user that less force should be used.

As well as or instead of imposing a force on the object 152 to cause it to move as described above, other types of feedback could be provided to the user about how well they are performing the simulated surgical procedure. Such feedback could be a vibrating effect in the event of deviation from the optimum surgical path, or a sound or a visual effect.

Other objects could be simulated. For example, the object 152 could be designed to represent a needle for training a surgeon or vet in post-operative suturing. The object 152 could be a pen and the motion device 150 could be used to help children learn to form letters accurately. In this latter case, the data pre-stored in the remote control device could include data on shape and formation of letters and imposed movement and/or other feedback could be provided if the user deviated from the stored letter shape or if they tried to write parts of a letter in the wrong order. Thus the user could receive training on how they are writing a letter as well as its appearance.

It will be appreciated that high bandwidth actuators would advantageously be used for causing movement of the feet in motion systems involving hand-held devices, since the movements and deviations from, for example a desired surgical path are small relative to those of the platform simulator of Fig. 1. Linear motors of a suitable specification include, for example, those available from LinMot.

Another example of a motion simulator for a hand-held device is shown in Fig. 14, indicated by reference numeral 200. In this example, the object 202 is a tennis racquet and the surface 204 is a substantially vertical, curved surface 204. Three feet 206, 208, 210 are attached to the frame 203 of the tennis racquet 202, each via a pair of struts 212. The feet 206, 208, 210 are configured to move across the surface 204. In this example, adhesion of the feet 206, 208, 210 is hindered by the effect of gravity, so means would be used to have the feet 206, 208, 210 moveable across the surface 204 without falling off. Such means could be air jets or magnetic means as described previously. The surface may not be absolutely vertical, but could be set at an angle, for example sloped at an acute angle to the vertical, to assist with adhering the feet to the surface. The angle and degree of curvature of the surface 204 is chosen such that when a person 214 swings the racquet 203 to hit a tennis ball 216, the feet 206, 208, 210 are able to remain in contact with the surface 204, whilst minimizing any impedance on the person's stroke (unless the particular simulation includes imposing motion on the racquet 203). This may be assisted by the struts 212 being readily extendable in response to a force being applied to them, for example by incorporating a sprung joint or a linear actuator as described previously. A strain gauge or similar could be provided at the joint to measure any extension or contraction undergone by the joint and that information could be fed to a controller for incorporation into the simulation.

It will be appreciated that the particular height and length of the surface 204 might be different from that shown. For example, it may be desirable to make it higher to allow a greater variety of shots to be played whilst the feet 206, 208, 210 can remain within the extent of the surface 204, but it is shown as about half the height of the person to improve clarity of the figure.

The person 214 could be supplied with either a real tennis ball 216 to hit or with a virtual ball on a screen positioned in a suitable place for the user, possibly outside the extent of the surface 214. In response to a ball 216 advancing towards the person 214, he or she swings the racquet 202 as they would a regular tennis racquet. The force or forces resulting are measured at the feet 206, 208, 210 in a manner previously described. Similarly to the example described with reference to Fig. 13, control means could be used to cause movement of the racquet in response to the characteristics of the person's swing and to provide feedback on the shot in comparison to stored data. In one example, the stored data could be collected by measuring the characteristics of a shot (e.g. swing trajectory, speed, distance and angle of trajectory (possibly mapped on a tennis court), localized racquet movements and body movements) from known tennis players of a good standard and based on successful shots hit by them. A visual of those players playing the shot(s) that were used to collect the stored data could be streamed to the person 214 in addition to the tennis ball 216 for the person 214 to view before or whilst hitting the ball 216. Data could also be stored and a visual provided of a tennis court. Feedback could be provided by causing the feet 206, 208, 210 to move so as to cause the racquet to take a trajectory or speed deemed better than that made by the person's swing themselves, in a similar manner to correction of an incision path as described above. Alternative feedback such as visual, audio and vibrations could also be supplied.

It will be appreciated that the tennis racquet as shown in Fig. 14 is only one example of an action that a motion system such as the motion system 200 could simulate. Similar principles could be applied to other sports, for example badminton, squash, golf or baseball. The size, curvature and angle to the vertical of the surface 204 and the position of a screen could be varied as appropriate. Regardless of the sport being simulated, the system could provide an indication of the quality/efficiency of the stroke and/or the resulting speed and or trajectory across a court/pitch etc.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A motion simulator system (1, 33) operable on a substantially flat stage (6) for imposing motion on a motion platform (1, 21) carrying an occupant (22), the motion simulator system comprising:
a plurality of feet (2, 3, 4; 23, 24, 25) coupled to the motion platform and capable of moving freely in two dimensions across the stage so as to impose substantially arbitrary three-dimensional motion on the motion platform relative to the stage,
**characterized by** a means (17) for displaying a virtual scene of a simulation environment to the occupant, which scene is updated in real time based on real-time position and orientation of the platform and supposed position and orientation of a vehicle in the simulation environment,
wherein each foot is coupled to the platform by a respective leg (5, 26) articulated with respect to the motion platform and to the respective foot, and wherein at least one of the legs comprises a drive mechanism operable in a direction along the length of the leg so as to alter the distance between the platform and the foot.

2. A motion simulator system as claimed in claim 1, wherein the displaying means is any one of: a screen which the platform comprises; a wall of an arena (7) defining an area in which the motion simulator system is located and which is visible to the occupant; a screen moveably mounted to a roof of an arena defining an area in which the motion simulator system is located and which is moveable in correlation with movement of the motion simulator system; a screen mounted on a moveable device arranged on a floor on which the motion simulator system sits and arranged to move mechanically independently of the motion simulator system; and a helmet or headset to be worn by the occupant for displaying the virtual scene in front of the occupant's eyes.

3. A motion simulator system as claimed in claim 1 or claim 2, further comprising a control unit (14) for implementing a motion simulation by causing the feet to move across the stage based on a control strategy using one or more of: stored data relating to an environment being mimicked by the motion simulation; stored performance data of the vehicle being simulated; data input by the occupant of the motion platform; outputs of a computational model of an environment and/or interactions between an environment and the vehicle being simulated.

4. A motion simulator system as claimed in claim 3, wherein the control unit is configured to:
generate one or more outputs for use in the control strategy by running a model to solve, in real-time, equations of motion governing dynamics of an interaction between movements imposed on the platform by a user of the system, the platform and the mimicked environment; and
provide at least some of the one or more outputs to the display to cause the display to update the virtual scene in real-time.

5. A motion simulator system as claimed in any preceding claim, wherein the motion platform is untethered to the stage.

6. A motion simulator system (150; 200) operable on a surface (170; 204) for imposing motion on an object (152; 202), the motion simulator system comprising:
a plurality of feet (162, 164, 166; 206, 208, 210) coupled to the object and moveably attached to the surface such that they are capable of moving freely across the surface so as to impose substantially arbitrary three-dimensional motion on the object relative to the surface,
**characterized by** means (17) for displaying a virtual scene of a simulation environment, which scene is updated in real time based on real-time position and orientation of the object and supposed position and orientation of a representation of the object in the simulation environment,
wherein each foot is coupled to the object by a respective leg (168, 212) articulated with respect to the object and to the respective foot, and wherein at least one of the legs comprises a drive mechanism operable in a direction along the length of the leg so as to alter the distance between the object and the foot.

7. A motion simulator system as claimed in claim 6, wherein the displaying means is any one of: a screen visible to a user (214) of the system; and a visual indication provided on the surface.

8. A motion simulator system as claimed in claim 6 or claim 7, wherein the surface has a configuration representative of a movement or a desired movement of the object in use in the environment being simulated, and wherein the surface is one of:
substantially planar and generally horizontally oriented; non-planar and generally horizontally oriented; curved and generally vertically oriented; generally inclined relative to the horizontal.

9. A motion simulator system as claimed in any of claims 6 to 8, further comprising a control unit (14) for implementing a motion simulation by causing the feet to move across the surface based on a control strategy using one or more of: stored data relating to an environment being mimicked by the motion simulation; stored performance data of the object being simulated; stored data of a procedure which can be carried out using the object being simulated; stored data relating to a movement being made by a user (214) of the system with the object; data input by a user operating the object; a detected force or other effect applied to the object; and outputs of a computational model of an environment and/or interactions between an environment and the object being simulated.

10. A motion simulator system as claimed in claim 9, wherein the control unit is configured to:
generate one or more outputs for use in the control strategy by running a model to solve, in real-time, equations of motion governing dynamics of an interaction between the user's control inputs, the object and the mimicked environment; and
provide at least some of the one or more outputs to the display to cause the display to update the virtual scene in real-time.

11. A motion simulator system as claimed in claim 9 or claim 10, wherein the control unit is configured to cause feedback to be provided to a user (214) holding the object of the motion imposed relative to a predefined motion, wherein the feedback comprises one or more of a force; an imposed movement; a vibration; a sound; a visual indicator; and an indication of deviation of movement from a predefined movement.

12. A motion simulator system as claimed in claim 11, wherein the object is untethered to the surface and is configured to be held in contact with the surface via the feet and to be moved across the surface by a user (214) holding the object and imparting a force or other effect on the object.

13. A motion simulator system as claimed in any preceding claim, wherein one or more of the feet comprises a battery for storing electrical energy and such foot is configured to be powered by the battery for driving across the stage or surface,
and optionally wherein the system is configured to cause the said one or more of the feet to recover energy to the battery during operation.

14. A motion simulator system as claimed in any preceding claim, wherein one or more of the feet comprises means to increase adhesion between the one or more feet and the stage or surface.

15. A motion simulator system as claimed in claim 14, wherein one or more of the feet:
either a) is configured to draw air so as to increase friction between the or each foot and the stage or surface,
or b) comprises a magnet and the surface comprises a ferromagnetic material or vice versa.

16. A computer program product comprising a machine-readable medium storing instructions that, which when executed by at least one programmable processor, cause the at least one programmable processor to perform operations comprising:
signalling a plurality of feet (2, 3, 4; 162, 164, 166; 206, 208, 210) of a motion simulator system (1; 33; 150; 200) to move across a substantially flat stage (6) or a surface (170; 204), the feet being capable of moving freely in two dimensions across the stage or surface so as to impose, on a payload of the motion simulator system, substantially arbitrary three-dimensional motion relative to the stage or surface, the feet being coupled to the payload,
**characterized in that** each foot is coupled to the payload by a respective leg (168, 212) articulated with respect to the payload and to the respective foot, and wherein at least one of the legs comprises a drive mechanism operable in a direction along the length of the leg so as to alter the distance between the payload and the foot, and **in that** the instructions further cause the at least one programmable processor to perform operations further comprising:
causing a display means (17) to display a virtual scene of a simulation environment, which scene is updated in real time based on real-time position and orientation of the payload and supposed position and orientation of a representation of the payload in the simulation environment; and
causing the drive mechanism to operate.

## Patentansprüche

1. Bewegungssimulatorsystem (1, 33), das auf einem im Wesentlichen flachen Podest (6) betrieben werden kann, um eine Bewegungsplattform (1, 21), die einen Insassen (22) trägt, in Bewegung zu versetzen, das Bewegungssimulatorsystem umfassend:
eine Vielzahl von Füßen (2, 3, 4; 23, 24, 25), die mit der Bewegungsplattform gekoppelt und in der Lage sind, sich frei in zwei Dimensionen über das Podest zu bewegen, um die Bewegungsplattform relativ zu dem Podest in eine im Wesentlichen willkürliche dreidimensionale Bewegung zu versetzen,
**gekennzeichnet durch** ein Mittel (17) zum Anzeigen einer virtuellen Szene einer Simulationsumgebung für den Insassen, wobei die Szene in Echtzeit basierend auf der Echtzeitposition und - ausrichtung der Plattform und der angenommenen Position und Ausrichtung eines Fahrzeugs in der Simulationsumgebung aktualisiert wird,
wobei jeder Fuß mit der Plattform durch einen jeweiligen Schenkel (5, 26) gekoppelt ist, der in Bezug auf die Bewegungsplattform und den jeweiligen Fuß angelenkt ist, und wobei zumindest einer der Schenkel einen Antriebsmechanismus umfasst, der in einer Richtung entlang der Länge des Schenkels betreibbar ist, um so den Abstand zwischen der Plattform und dem Fuß zu verändern.

2. Bewegungssimulatorsystem nach Anspruch 1, wobei das Anzeigemittel eines der Folgenden ist: ein Bildschirm, den die Plattform umfasst;
eine Wand einer Arena (7), die einen Bereich definiert, in dem sich das Bewegungssimulatorsystem befindet und der für den Insassen sichtbar ist;
einen Bildschirm, der beweglich auf dem Dach einer Arena montiert ist und einen Bereich definiert, in dem sich das Bewegungssimulatorsystem befindet und der in Korrelation mit der Bewegung des Bewegungssimulatorsystems beweglich ist;
einen Bildschirm, der auf einer beweglichen Vorrichtung montiert ist, die auf einem Boden angeordnet ist, auf dem das Bewegungssimulatorsystem sitzt, und der so angeordnet ist, dass er sich mechanisch unabhängig von dem Bewegungssimulatorsystem bewegt; und einen Helm oder ein Headset, der bzw. das von dem Insassen zu tragen ist, um die virtuelle Szene vor den Augen des Insassen anzuzeigen.

3. Bewegungssimulatorsystem nach Anspruch 1 oder Anspruch 2, ferner umfassend eine Steuereinheit (14) zum Implementieren einer Bewegungssimulation, indem die Füße veranlasst werden, sich über das Podest zu bewegen, basierend auf einer Steuerstrategie, die eines oder mehrere der folgenden Elemente verwendet: gespeicherte Daten bezüglich einer Umgebung, die durch die Bewegungssimulation nachgeahmt wird; gespeicherte Leistungsdaten des Fahrzeugs, das simuliert wird; Daten, die durch den Insassen der Bewegungsplattform eingegeben werden; Ausgaben eines Rechenmodells einer Umgebung und/oder Interaktionen zwischen einer Umgebung und dem Fahrzeug, das simuliert wird.

4. Bewegungssimulatorsystem nach Anspruch 3, wobei die Steuereinheit konfiguriert ist, zum:
Erzeugen einer oder mehrerer Ausgaben zur Verwendung in der Steuerstrategie durch Ausführen eines Modells zur Lösung von Bewegungsgleichungen in Echtzeit, welche die Dynamik einer Interaktion zwischen Bewegungen regeln, welche die Plattform durch einen Benutzer des Systems, der Plattform und der nachgeahmten Umgebung erfährt; und
Bereitstellen zumindest einiger der einen oder mehreren Ausgaben für die Anzeige, um zu bewirken, dass die Anzeige die virtuelle Szene in Echtzeit aktualisiert.

5. Bewegungssimulatorsystem nach einem der vorhergehenden Ansprüche, wobei die Bewegungsplattform unabhängig von dem Podest ist.

6. Bewegungssimulatorsystem (150; 200), das auf einer Oberfläche (170; 204) betrieben werden kann, um ein Objekt (152; 202) in Bewegung zu versetzen, das Bewegungssimulatorsystem umfassend:
eine Vielzahl von Füßen (162, 164, 166; 206, 208, 210), die mit dem Objekt gekoppelt und beweglich an der Oberfläche befestigt sind, sodass sie in der Lage sind, sich frei über die Oberfläche zu bewegen, um das Objekt relativ zu der Oberfläche in eine im Wesentlichen willkürliche dreidimensionale Bewegung zu versetzen,
**gekennzeichnet durch** Mittel (17) zum Anzeigen einer virtuellen Szene einer Simulationsumgebung, wobei die Szene in Echtzeit basierend auf der Echtzeitposition und -ausrichtung des Objekts und der angenommenen Position und Ausrichtung einer Darstellung des Objekts in der Simulationsumgebung aktualisiert wird,
wobei jeder Fuß mit dem Objekt durch einen jeweiligen Schenkel (168, 212) gekoppelt ist, der in Bezug auf das Objekt und den jeweiligen Fuß angelenkt ist, und wobei zumindest einer der Schenkel einen Antriebsmechanismus umfasst, der in einer Richtung entlang der Länge des Schenkels betreibbar ist, um so den Abstand zwischen dem Objekt und dem Fuß zu verändern.

7. Bewegungssimulatorsystem nach Anspruch 6, wobei das Anzeigemittel eines der Folgenden ist: ein für einen Benutzer (214) des Systems sichtbarer Bildschirm; und eine auf der Oberfläche bereitgestellte visuelle Anzeige.

8. Bewegungssimulatorsystem nach Anspruch 6 oder 7, wobei die Oberfläche eine Konfiguration aufweist, die eine Bewegung oder eine gewünschte Bewegung des in der simulierten Umgebung verwendeten Objekts darstellt, und wobei die Oberfläche eine der folgenden Oberflächen ist: im Wesentlichen eben und im Allgemeinen horizontal ausgerichtet; nicht eben und im Allgemeinen horizontal ausgerichtet; gekrümmt und im Allgemeinen vertikal ausgerichtet; im Allgemeinen relativ zu der Horizontalen geneigt.

9. Bewegungssimulatorsystem nach einem der Ansprüche 6 bis 8, ferner umfassend eine Steuereinheit (14) zum Implementieren einer Bewegungssimulation, indem die Füße veranlasst werden, sich über die Oberfläche zu bewegen, basierend auf einer Steuerstrategie, die eine oder mehrere der Folgenden verwendet: gespeicherte Daten bezüglich einer Umgebung, die durch die Bewegungssimulation nachgeahmt wird; gespeicherte Leistungsdaten des zu simulierenden Objekts; gespeicherte Daten eines Verfahrens, das mit dem zu simulierenden Objekt ausgeführt werden kann; gespeicherte Daten bezüglich einer Bewegung, die von einem Benutzer (214) des Systems mit dem Objekt ausgeführt wird; eine Dateneingabe durch einen Benutzer, der das Objekt betreibt; eine erfasste Kraft oder eine andere Wirkung, die auf das Objekt ausgeübt wird; und Ausgaben eines Berechnungsmodells einer Umgebung und/oder der Interaktionen zwischen einer Umgebung und dem zu simulierenden Objekt.

10. Bewegungssimulatorsystem nach Anspruch 9, wobei die Steuereinheit konfiguriert ist, zum:
Erzeugen einer oder mehrerer Ausgaben zur Verwendung in der Steuerstrategie durch Ausführen eines Modells zur Lösung von Bewegungsgleichungen in Echtzeit, welche die Dynamik einer Interaktion zwischen den Steuereingaben des Benutzers, dem Objekt und der nachgeahmten Umgebung steuern; und
Bereitstellen zumindest einiger der einen oder mehreren Ausgaben für die Anzeige, um zu bewirken, dass die Anzeige die virtuelle Szene in Echtzeit aktualisiert.

11. Bewegungssimulatorsystem nach Anspruch 9 oder Anspruch 10, wobei die Steuereinheit so konfiguriert ist, dass sie eine Rückmeldung veranlasst, die einem Benutzer (214), der das Objekt der angewiesenen Bewegung relativ zu einer vordefinierten Bewegung hält, bereitgestellt wird, wobei die Rückmeldung eine oder mehrere einer Kraft umfasst; eine angewiesene Bewegung; eine Vibration; einen Ton; einen visuellen Indikator; und eine Anzeige einer Abweichung der Bewegung von einer vordefinierten Bewegung.

12. Bewegungssimulatorsystem nach Anspruch 11, wobei das Objekt unabhängig von der Oberfläche ist und so konfiguriert ist, dass es über die Füße in Kontakt mit der Oberfläche gehalten und von einem Benutzer (214), der das Objekt hält und eine Kraft oder eine andere Wirkung auf das Objekt ausübt, über die Oberfläche bewegt werden kann.

13. Bewegungssimulatorsystem nach einem der vorhergehenden Ansprüche, wobei einer oder mehrere Füße eine Batterie zum Speichern elektrischer Energie umfassen und ein derartiger Fuß so konfiguriert ist, dass er zum Fahren über das Podest oder die Oberfläche von der Batterie gespeist wird,
und wahlweise wobei das System so konfiguriert ist, dass es bewirkt, dass der eine oder die mehreren Füße während des Betriebs Energie in die Batterie zurückgewinnen.

14. Bewegungssimulatorsystem nach einem der vorhergehenden Ansprüche, wobei einer oder mehrere Füße Mittel zum Erhöhen der Haftung zwischen dem einen oder den mehreren Füßen und dem Podest oder der Oberfläche umfassen.

15. Bewegungssimulatorsystem
nach Anspruch 14, wobei einer oder mehrere der Füße:
entweder a) so konfiguriert ist, dass er Luft zieht, um die Reibung zwischen dem oder jedem Fuß und dem Podest oder der Oberfläche zu erhöhen,
oder b) einen Magneten umfasst und die Oberfläche aus einem ferromagnetischen Material besteht oder umgekehrt.

16. Computerprogrammprodukt, umfassend ein maschinenlesbares Medium, das Anweisungen speichert, die bei Ausführung durch mindestens einen programmierbaren Prozessor den mindestens einen programmierbaren Prozessor zum Ausführen von Operationen veranlassen, umfassend:
Signalisieren einer Vielzahl von Füßen (2, 3, 4; 162, 164, 166; 206, 208, 210) eines Bewegungssimulatorsystems (1; 33; 150; 200), sich über ein im Wesentlichen flaches Podest (6) oder eine Oberfläche (170; 204) zu bewegen, wobei die Füße in der Lage sind, sich frei in zwei Dimensionen über das Podest oder die Oberfläche zu bewegen, um so eine Nutzlast des Bewegungssimulatorsystems in eine im Wesentlichen willkürliche dreidimensionale Bewegung relativ zu dem Podest oder der Oberfläche zu versetzen, wobei die Füße mit der Nutzlast gekoppelt sind,
**dadurch gekennzeichnet, dass** jeder Fuß mit der Nutzlast durch einen jeweiligen Schenkel (168, 212) gekoppelt ist, der in Bezug auf die Nutzlast und den jeweiligen Fuß angelenkt ist, und wobei zumindest einer der Schenkel einen Antriebsmechanismus umfasst, der in einer Richtung entlang der Länge des Schenkels betreibbar ist, um den Abstand zwischen der Nutzlast und dem Fuß zu verändern, und wobei die Anweisungen ferner veranlassen, dass der zumindest eine programmierbare Prozessor Operationen durchführt, ferner umfassend:
Veranlassen eines Anzeigemittels (17), eine virtuelle Szene einer Simulationsumgebung anzuzeigen, wobei die Szene in Echtzeit basierend auf der Echtzeitposition und -ausrichtung der Nutzlast und der angenommenen Position und Ausrichtung einer Darstellung der Nutzlast in der Simulationsumgebung aktualisiert wird; und Veranlassen des Betriebs des Antriebsmechanismus.

## Revendications

1. Système de simulateur de mouvement (1, 33) pouvant fonctionner sur une scène sensiblement plate (6) pour imposer un mouvement à une plateforme de mouvement (1, 21) portant un occupant (22), le système de simulateur de mouvement comprenant :
une pluralité de pieds (2, 3, 4 ; 23, 24, 25) couplés à la plateforme de mouvement et capables de se déplacer librement dans deux dimensions sur la scène de manière à imposer un mouvement tridimensionnel sensiblement arbitraire à la plateforme de mouvement par rapport à la scène,
**caractérisé par** un moyen (17) d'affichage d'un lieu virtuel d'un environnement de simulation à l'occupant, lequel lieu est mis à jour en temps réel sur la base de la position et de l'orientation en temps réel de la plateforme et de la position et de l'orientation supposées d'un véhicule dans l'environnement de simulation,
dans lequel chaque pied est couplé à la plateforme par une jambe respective (5, 26) articulée par rapport à la plateforme de mouvement et au pied respectif, et dans lequel au moins une des jambes comprend un mécanisme d'entraînement pouvant fonctionner dans une direction le long de la longueur de la jambe de manière à modifier la distance entre la plateforme et le pied.

2. Système de simulateur de mouvement selon la revendication 1, dans lequel le moyen d'affichage est l'un quelconque parmi : un écran que la plateforme comprend ;
une paroi d'une arène (7) définissant une zone dans laquelle le système de simulateur de mouvement est situé et visible pour l'occupant ;
un écran monté de manière mobile sur un toit d'une arène définissant une zone dans laquelle le système de simulateur de mouvement est situé et qui est mobile en corrélation avec le déplacement du système de simulateur de mouvement ;
un écran monté sur un dispositif mobile disposé sur un socle sur lequel repose le système de simulateur de mouvement et disposé pour se déplacer mécaniquement indépendamment du système de simulateur de mouvement ; et un casque ou une oreillette à porter par l'occupant pour afficher le lieu virtuel devant les yeux de l'occupant.

3. Système de simulateur de mouvement selon la revendication 1 ou la revendication 2, comprenant en outre une unité de commande (14) pour mettre en œuvre une simulation de mouvement en amenant les pieds à se déplacer sur la scène sur la base d'une stratégie de commande utilisant une ou plusieurs parmi : des données stockées relatives à un environnement imité par la simulation de mouvement ; des données de performance stockées du véhicule simulé ; une entrée de données par l'occupant de la plateforme de mouvement ; des sorties d'un modèle de calcul informatique d'un environnement et/ou d'interactions entre un environnement et le véhicule simulé.

4. Système de simulateur de mouvement selon la revendication 3, dans lequel l'unité de commande est configurée pour :
la génération d'une ou plusieurs sorties à utiliser dans la stratégie de commande en exécutant un modèle pour résoudre, en temps réel, des équations de mouvement régissant la dynamique d'une interaction entre des déplacements imposés à la plateforme par un utilisateur du système, la plateforme et l'environnement imité ; et
la fourniture d'au moins une partie des une ou plusieurs sorties à l'affichage pour amener l'affichage à mettre à jour le lieu virtuel en temps réel.

5. Système de simulateur de mouvement selon l'une quelconque des revendications précédentes, dans lequel la plateforme de mouvement est détachée de la scène.

6. Système de simulateur de mouvement (150 ; 200) pouvant fonctionner sur une surface (170 ; 204) pour imposer un mouvement à un objet (152 ; 202), le système de simulateur de mouvement comprenant :
une pluralité de pieds (162, 164, 166 ; 206, 208, 210) couplés à l'objet et fixés de manière amovible à la surface de sorte qu'ils sont capables de se déplacer librement sur la surface afin d'imposer un mouvement tridimensionnel sensiblement arbitraire à l'objet par rapport à la surface,
**caractérisé par** un moyen (17) d'affichage d'un lieu virtuel d'un environnement de simulation, lequel lieu est mis à jour en temps réel sur la base de la position et de l'orientation en temps réel de l'objet et de la position et de l'orientation supposées d'une représentation de l'objet dans l'environnement de simulation,
dans lequel chaque pied est couplé à l'objet par une jambe respective (168, 212) articulée par rapport à l'objet et au pied respectif, et dans lequel au moins une des jambes comprend un mécanisme d'entraînement pouvant fonctionner dans une direction le long de la longueur de la jambe de manière à modifier la distance entre l'objet et le pied.

7. Système de simulateur de mouvement selon la revendication 6, dans lequel le moyen d'affichage est l'un quelconque parmi : un écran visible par un utilisateur (214) du système ; et une indication visuelle fournie sur la surface.

8. Système de simulateur de mouvement selon la revendication 6 ou la revendication 7, dans lequel la surface a une configuration représentative d'un déplacement ou d'un déplacement souhaité de l'objet utilisé dans l'environnement simulé, et dans lequel la surface est l'une parmi : sensiblement plane et généralement orientée horizontalement ; non plane et généralement orientée horizontalement ; incurvée et généralement orientée verticalement ; généralement inclinée par rapport à l'horizontale.

9. Système de simulateur de mouvement selon l'une quelconque des revendications 6 à 8, comprenant en outre une unité de commande (14) pour mettre en œuvre une simulation de mouvement en amenant les pieds à se déplacer sur la surface sur la base d'une stratégie de commande utilisant une ou plusieurs parmi : des données stockées relatives à un environnement imité par la simulation de mouvement ; des données de performance stockées de l'objet simulé ; des données stockées d'une procédure qui peut être effectuée en utilisant l'objet simulé ; des données stockées relatives à un déplacement fait par un utilisateur (214) du système avec l'objet ; une entrée de données par un utilisateur faisant fonctionner l'objet ; une force détectée ou un autre effet appliqué à l'objet ; et des sorties d'un modèle de calcul informatique d'un environnement et/ou d'interactions entre un environnement et l'objet simulé.

10. Système de simulateur de mouvement selon la revendication 9, dans lequel l'unité de commande est configurée pour :
la génération d'une ou plusieurs sorties à utiliser dans la stratégie de commande en exécutant un modèle pour résoudre, en temps réel, des équations de mouvement régissant la dynamique d'une interaction entre les entrées de commande de l'utilisateur, l'objet et l'environnement imité ; et
la fourniture d'au moins une partie des une ou plusieurs sorties à l'affichage pour amener l'affichage à mettre à jour le lieu virtuel en temps réel.

11. Système de simulateur de mouvement selon la revendication 9 ou la revendication 10, dans lequel l'unité de commande est configurée pour amener une rétroaction à fournir à un utilisateur (214) maintenant l'objet du mouvement imposé par rapport à un mouvement prédéfini, dans lequel la rétroaction comprend un ou plusieurs d'une force ; d'un déplacement imposé ; d'une vibration ; d'un son ; d'un indicateur visuel ; et d'une indication de déviation du déplacement par rapport à un mouvement prédéfini.

12. Système de simulateur de mouvement selon la revendication 11, dans lequel l'objet est détaché de la surface et est configuré pour être maintenu en contact avec la surface par les pieds et pour être déplacé sur la surface par un utilisateur (214) qui maintient l'objet et lui transmet une force ou un autre effet.

13. Système de simulateur de mouvement selon l'une quelconque des revendications précédentes, dans lequel un ou plusieurs des pieds comprennent une batterie pour stocker de l'énergie électrique et ce pied est configuré pour être alimenté par la batterie pour l'entraînement sur la scène ou la surface,
et éventuellement dans lequel le système est configuré pour amener lesdits un ou plusieurs pieds à récupérer de l'énergie à la batterie pendant le fonctionnement.

14. Système de simulateur de mouvement selon l'une quelconque des revendications précédentes, dans lequel un ou plusieurs des pieds comprennent un moyen pour augmenter l'adhérence entre les un ou plusieurs pieds et la scène ou la surface.

15. Système de simulateur de mouvement selon la revendication 14, dans lequel un ou plusieurs des pieds :
a) sont configurés pour aspirer de l'air de manière à augmenter la friction entre le ou chaque pied et la scène ou la surface,
ou b) comprennent un aimant et la surface comprend un matériau ferromagnétique ou vice versa.

16. Produit de programme informatique comprenant un support lisible par machine stockant des instructions qui, lorsqu'elles sont exécutées par au moins un processeur programmable, amènent l'au moins un processeur programmable à effectuer des opérations comprenant :
la signalisation d'une pluralité de pieds (2, 3, 4 ; 162, 164, 166 ; 206, 208, 210) d'un système de simulateur de mouvement (1 ; 33 ; 150 ; 200) pour se déplacer sur une scène (6) ou une surface (170 ; 204) sensiblement plane, les pieds étant capables de se déplacer librement dans deux dimensions sur la scène ou la surface de manière à imposer, à une charge utile du système de simulateur de mouvement, un mouvement tridimensionnel sensiblement arbitraire par rapport à la scène ou à la surface, les pieds étant couplés à la charge utile,
**caractérisé en ce que** chaque pied est couplé à la charge utile par une jambe respective (168, 212) articulée par rapport à la charge utile et au pied respectif, et dans lequel au moins une des jambes comprend un mécanisme d'entraînement pouvant fonctionner dans une direction le long de la longueur de la jambe afin de modifier la distance entre la charge utile et le pied, et **en ce que** les instructions amènent en outre l'au moins un processeur programmable à effectuer des opérations comprenant en outre :
le fait d'amener un moyen d'affichage (17) à afficher un lieu virtuel d'un environnement de simulation, lequel lieu est mis à jour en temps réel sur la base de la position et de l'orientation en temps réel de la charge utile et de la position et de l'orientation supposées d'une représentation de la charge utile dans l'environnement de simulation ; et
le fait d'amener le fonctionnement du mécanisme d'entraînement.
